# EUROPÄISCHE PATENTANMELDUNG

(11) **EP 4 089 126 A1**
(43) Veröffentlichungstag der Anmeldung: **16.11.2022**
(21) Anmeldenummer: 21173508.9
(22) Anmeldetag: 12.05.2021
(51) Int. Cl.: C08G 18/08, C08G 18/28, C08G 18/32, C08G 18/42, C08G 18/72, C08G 18/73, C08G 18/75, C09J 175/02, C09J 175/04, C08G 18/76, C08G 18/79

(54) **KLEBSTOFFE**

(71) Anmelder: Covestro Deutschland AG, 51373 Leverkusen (DE)
(72) Erfinder: Buechner, Joerg, 51467 Bergisch Gladbach (DE); Kraus, Harald, 51371 Leverkusen (DE); Fait, Thomas, 53844 Troisdorf (DE); Arndt, Wolfgang, 41542 Dormagen (DE)
(74) Vertreter: Levpat

(57) **Zusammenfassung**

Die vorliegende Erfindung betrifft eine wässrige Dispersion enthaltend mindestens ein teilkristallines Polyurethan-Polyharnstoffpolymer und mindestens ein oberflächendeaktiviertes Polyisocyanat, bevorzugt mindestens ein oberflächendeaktiviertes Feststoffpolyisocyanat, wobei die Schmelztemperatur des teilkristallinen Polyurethan-Polyharnstoffpolymers mindestens 55 °C beträgt, ein Verfahren zur Herstellung der wässrigen Dispersion, die Verwendung der wässrigen Dispersion zur Herstellung von beschichteten Substraten oder zur Herstellung von Klebstofffolien, Flächige oder dreidimensionale Substrate, beschichtet mit der wässrigen Dispersion, ein Substrat, beschichtet mit mindestens einem teilkristallinen Polyurethan-Polyharnstoffpolymer und mindestens einem oberflächendeaktivierten Polyisocyanat, bevorzugt mindestens einem oberflächendeaktivierten Feststoffpolyisocyanat, wobei die Schmelztemperatur des teilkristallinen Polyurethan-Polyharnstoffpolymers mindestens 55 °C beträgt, eine Klebstofffolie, umfassend mindestens ein teilkristallines Polyurethan-Polyharnstoffpolymer und mindestens ein oberflächendeaktiviertes Polyisocyanat, bevorzugt mindestens ein oberflächendeaktiviertes Feststoffpolyisocyanat, dadurch gekennzeichnet, dass die Schmelztemperatur des teilkristallinen Polyurethan-Polyharnstoffpolymers mindestens 55 °C beträgt, und ein getrockneter Klebstofffilm, erhalten aus einer solchen wässrigen Dispersion.

## Beschreibung

Die vorliegende Erfindung betrifft eine wässrige Dispersion enthaltend mindestens ein teilkristallines Polyurethan-Polyharnstoffpolymer und mindestens ein oberflächendeaktiviertes Polyisocyanat, bevorzugt mindestens ein oberflächendeaktiviertes Feststoffpolyisocyanat, wobei die Schmelztemperatur des teilkristallinen Polyurethan-Polyharnstoffpolymers mindestens 55 °C beträgt, ein Verfahren zur Herstellung der wässrigen Dispersion, die Verwendung der wässrigen Dispersion zur Herstellung von beschichteten Substraten oder zur Herstellung von Klebstofffolien, Flächige oder dreidimensionale Substrate, beschichtet mit der wässrigen Dispersion, ein Substrat, beschichtet mit mindestens einem teilkristallinen Polyurethan-Polyharnstoffpolymer und mindestens einem oberflächendeaktivierten Polyisocyanat, bevorzugt mindestens einem oberflächendeaktivierten Feststoffpolyisocyanat, wobei die Schmelztemperatur des teilkristallinen Polyurethan-Polyharnstoffpolymers mindestens 55 °C beträgt, eine Klebstofffolie, umfassend mindestens ein teilkristallines Polyurethan-Polyharnstoffpolymer und mindestens ein oberflächendeaktiviertes Polyisocyanat, bevorzugt mindestens ein oberflächendeaktiviertes Feststoffpolyisocyanat, dadurch gekennzeichnet, dass die Schmelztemperatur des teilkristallinen Polyurethan-Polyharnstoffpolymers mindestens 55 °C beträgt, und ein getrockneter Klebstofffilm, erhalten aus einer solchen wässrigen Dispersion.

Aus dem Stand der Technik ist es bekannt, Polyurethane, die lineare, bei einer Temperatur unterhalb von 50 °C kristallisierende Polymerketten besitzen, für die wärmeaktivierte Verklebung von temperaturempfindlichen Substraten einzusetzen. Bei der Verarbeitung ohne den Zusatz eines Vernetzers werden aber nur niedrige, mit der Schmelztemperatur der in den vorliegenden Polyolen vorhandenen Polyestersegmente korrelierende, Wärmebeständigkeiten erreicht. Außerdem ist die Hydrolysebeständigkeit der Klebeverbindung bei einer Verarbeitung ohne Vernetzer für viele Anwendungen unzureichend. Aus diesem Grund werden solche Dispersionspolymere üblicherweise unter Mitverwendung von bei 23 °C flüssigen, hydrophil modifizierten Polyisocyanaten verarbeitet. Der Gewinn an verbesserten Eigenschaften wird jedoch mit einem höheren technischen Aufwand für die sogenannte zweikomponentige (2K)-Verarbeitung erkauft. Dabei muss der Zusatz der Vernetzerkomponente unmittelbar vor der Verarbeitung der Dispersion erfolgen. Außerdem ist die zweikomponentige Verarbeitung hinsichtlich des Zusatzes der richtigen Menge an Vernetzerkomponente und des homogenen Einrührens dieser fehleranfällig.

Eine übliche "Topfzeit" einer solchen zweikomponentigen Mischung beträgt im Allgemeinen ein bis zwölf Stunden. Darüber hinaus müssen die getrockneten Klebstoffschichten innerhalb von etwa einer bis zwölf Stunden, der so genannten "offenen Zeit", verarbeitet werden, da sonst wegen der fortschreitenden Vernetzungsreaktion das Polymer nicht mehr ausreichend fließfähig ist, um unter den üblichen Bedingungen der wärmeinduzierten Verklebung verarbeitet werden zu können.

Die zweikomponentige Arbeitsweise weist daher den Nachteil auf, dass die Arbeitsschritte Applikation der Dispersion bzw. Erzeugung der Klebstoffschicht auf den zu verklebenden Substratoberflächen und der Fügeprozess weder zeitlich noch räumlich voneinander getrennt durchgeführt werden können. Aus wirtschaftlicher Sicht wäre diese Trennung jedoch für eine Vielzahl von Anwendungen zweckmäßig und wünschenswert.

Aus dem Stand der Technik sind Klebstoff-Formulierungen mit festen, feinteiligen Isocyanaten bekannt. Diese so genannten latent-reaktiven Dispersionsklebstoffe basieren auf einer Dispersion enthaltend ein isocyanatreaktives Polymer und feinteilige Feststoffisocyanat-Partikel. Geeignete Feststoffisocyanate sind insbesondere Polyisocyanate mit einer Schmelz- bzw. Erweichungstemperatur von mehr als 40 °C.

EP-A 1 172 390 offenbart lagerstabile, im Wesentlichen wässrige Dispersionen, die desaktivierte Isocyanate und isocyanatreaktive Polymere enthalten und bereits bei niedrigen Temperaturen vernetzen. Die Vernetzungsreaktion beginnt nach dem Entfernen des Wassers bei Temperaturen von 5 bis 40 °C. Die wässrigen Dispersionszubereitungen zeichnen sich durch eine gute Lagerstabilität aus. Nachteilig dieser Lösung ist, dass die aus der Dispersion erzeugte Beschichtung nicht lagerstabil ist, da die Vernetzungsreaktion mit dem Trocknen der Schicht beginnt. Die gewünschte räumliche und zeitliche Trennung der Verarbeitungsschritte Klebstoffauftrag und Fügeprozess kann mit dieser Arbeitsanweisung nicht erreicht werden.

EP-A 1 134 245 beschreibt lagerstabile Zubereitungen aus feinteiligen Di- und Polyisocyanat-Pulvern, die ohne Oberflächendeaktivierung direkt in die wässrigen isocyanatreaktiven Polymerdispersionen eingearbeitet werden können. Die Vernetzungsreaktion wird bei diesen Formulierungen durch Erwärmen der getrockneten Schicht auf eine Temperatur von wenigstens 65 °C ausgelöst. Auch hier sind die aus den Formulierungen erhaltenen Beschichtungen nicht lagerstabil. Die gewünschte räumliche und zeitliche Trennung der Verarbeitungsschritte Klebstoffauftrag und Fügeprozess kann auch mit dieser Arbeitsanweisung nicht erreicht werden.

EP-A 0 922 720 offenbart die Verwendung wässriger Dispersionen, die wenigstens ein oberflächendeaktiviertes Polyisocyanat und wenigstens ein isocyanatreaktives Polymer enthalten zur Herstellung von lagerstabilen, latent-reaktiven Schichten oder Pulvern, die durch Erwärmung zur Vernetzung gebracht werden können. Als Polyisocyanate können alle aliphatischen, cycloaliphatischen, heterocyclischen oder aromatischen Isocyanate zur Anwendung kommen, die einen Schmelzpunkt oberhalb von 40 °C aufweisen. Die Stabilität der unreagierten (latent-reaktiven) Systeme (Filme oder Pulver), die Reaktionstemperatur und der Reaktionsverlauf werden nach dieser Lehre durch die Art des Polyisocyanats, durch die Menge des Oberflächenstabilisators, durch den Lösungsparameter des funktionalisierten Polymers sowie durch Katalysatoren, Weichmacher und Hilfsmittel bestimmt.

In EP 2 209 619 A1 werden mit einer latent-reaktiven Klebstoffschicht ausgerüstete Identifikationsdokumente beschrieben. Die Prozessschritte Klebstoffauftrag und Klebeprozess sind hierbei zeitlich und räumlich getrennt. Die Trocknung der wässrigen latent-reaktiven Klebstoffschicht sowie die Lagerung der mit dem reaktiven Klebstoffpolymer ausgerüsteten thermoplastischen Folien erfolgt bei Raumtemperatur. Die Lagerfähigkeit der beschichteten Substrate beträgt mindestens 21 Tage. Der Klebeprozess erfolgt vorzugsweise bei einer Temperatur unterhalb von 90 °C.

Es besteht, z.B. in der Automobilindustrie, der Wunsch Dekorfolien mit reaktiven Klebstoffschichten lagerstabil auszurüsten, wobei die Stabilität der Klebstoffschichten auch bei Temperaturen deutlich oberhalb von 40 °C über den Zeitraum von mehreren Monaten gegeben sein muss. Die Dekorfolien sollen z.B. in einer gemäßigten Klimazone z.B. Nordeuropa mit dem reaktiven Klebstoffpolymer ausgerüstet werden um dann bei Bedarf in einer heißeren Klimazone, z.B. Nordafrika oder Mexiko, auf ein Trägermaterial aufgeklebt werden. Um diese Fertigungskette wirtschaftlich darstellen zu können, müssen die mit der reaktiven Klebstoffschicht ausgerüsteten Dekorfolien bzw. die Klebstofffolien ohne Kühlkette transportiert und gelagert werden können.

Die Aufgabe der vorliegenden Erfindung besteht somit in der Bereitstellung einer wässrigen Dispersion, insbesondere zur Ausbildung einer latent-reaktiver Klebstoffschicht, einer entsprechenden Klebstofffolie oder Klebstoff-Pulver, die bei Temperaturen oberhalb von 50 °C lagerstabil sind, und die beispielsweise über mehrere Monate bei Temperaturen oberhalb von 50 °C gelagert werden können, ohne dass eine nennenswerte Vernetzung des Klebstoffpolymers eintritt.

Gelöst wurde die Aufgabe durch die erfindungsgemäße wässrige Dispersion enthaltend mindestens ein teilkristallines Polyurethan-Polyharnstoffpolymer und mindestens ein oberflächendeaktiviertes Polyisocyanat, bevorzugt mindestens ein oberflächendeaktiviertes Feststoffpolyisocyanat, wobei die Schmelztemperatur des teilkristallinen Polyurethan-Polyharnstoffpolymers mindestens 55 °C beträgt.

Die vorliegende Erfindung betrifft eine wässrige Dispersion enthaltend mindestens ein teilkristallines Polyurethan-Polyharnstoffpolymer. Dabei können die in der dispersen Phase vorliegenden teilkristallinen Polymere Polyurethane im engeren Sinn sein, d.h. solche Polymere, die durch Polymerisation von Polyolen und Polyisocyanaten erhalten werden, und/oder es können auch solche Polymere sein, bei denen als Aufbau-Komponenten auch Mono- und/oder Diamine eingesetzt werden, gegebenenfalls als Kettenverlängerer, wobei sich Harnstoffgruppen ausbilden. Somit werden die erfindungsgemäß einsetzbaren Dispersionen als wässrige Polyurethan-Polyurethanharnstoff-Dispersionen bezeichnet.

Als teilkristallin oder kristallin wird erfindungsgemäß ein Polymer bezeichnet, wenn es in der DSC-Messung nach DIN 65467 - 1999-03 bei einer Aufheizrate von 20 K/min einen Schmelzpeak aufweist. Der Schmelzpeak wird durch das Aufschmelzen regelmäßiger Teilstrukturen im Polymer verursacht. Die Schmelztemperatur der aus den erfindungsgemäßen Dispersionen erhaltenen Polymere bzw. Polymerschichten liegt dabei bevorzugt 55 bis 120 °C, besonders bevorzugt 55 bis 100 °C, ganz besonders bevorzugt 55 bis 90 °C, jeweils bestimmt durch DSC-Messung nach DIN 65467 - 1999-03. Die Schmelzenthalpie der aus den erfindungsgemäßen Dispersionen erhaltenen Polymere bzw. Polymerschichten liegt dabei im Allgemeinen bei > 10 J/g, bevorzugt bei > 20 J/g, besonders bevorzugt bei > 25 J/g. Ausgewertet wird jeweils die erste Aufheizung, um auch langsam kristallisierende Polymere zu erfassen.

Im Allgemeinen kann die vorliegende Erfindung mit jedem dem Fachmann als geeignet erscheinenden teilkristallinen Polyurethan-Polyharnstoffpolymer mit entsprechender Schmelztemperatur durchgeführt werden.

Bevorzugt ist das erfindungsgemäß eingesetzte Polyurethan-Polyharnstoffpolymer aufgebaut aus
A(i) mindestens einem kristallinen oder teilkristallinen difunktionellen Polyesterpolyol mit einem zahlenmittleren Molekulargewicht von wenigstens 400 g/mol und einer Schmelztemperatur von wenigstens 55 °C,
A(ii) optional mindestens einer difunktionellen Polyolkomponente mit einem zahlenmittleren Molekulargewicht von 62 bis 399 g/mol,
A(iii) mindestens einer Isocyanatkomponente,
A(iv) mindestens einer gegenüber Isocyanat reaktiven Komponente, die mindestens eine ionische oder potentiell ionische Gruppe trägt, und
A(v) optional weiteren gegenüber Isocyanat reaktiven Komponenten.

Das mindestens eine teilkristalline Polyurethan-Polyharnstoffpolymer enthält bevorzugt 50 bis 95 Gew.-% des Bestandteils A(i), 0 bis 10 Gew.-% des Bestandteils A(ii), 4 bis 25 Gew.-% des Bestandteils A(iii), 0,5 bis 10 Gew.-% des Bestandteils A(iv) und 0 bis 30 Gew.-% des Bestandteils A(v), wobei die Summe der Bestandteile 100 Gew.-% ergibt.

Bevorzugt enthält das mindestens eine teilkristalline Polyurethan-Polyharnstoffpolymer 65 bis 92 Gew.-% des Bestandteils A(i), 0 bis 5 Gew.-% des Bestandteils A(ii), 6 bis 15 Gew.-% des Bestandteils A(iii), 0,5 bis 5 Gew.-% des Bestandteils A(iv) und 0 bis 25 Gew.-% des Bestandteils A(v), wobei die Summe der Bestandteile 100 Gew.-% ergibt.

Besonders bevorzugt enthält das mindestens eine teilkristalline Polyurethan-Polyharnstoffpolymer 75 bis 92 Gew.-% des Bestandteils A(i)), 0 bis 5 Gew.-% des Bestandteils A(ii), 8 bis 15 Gew.-% des Bestandteils A(iii), 0,5 bis 4 Gew.-% des Bestandteils A(iv) und 0 bis 15 Gew.-% des Bestandteils A(v), wobei die Summe der Bestandteile 100 Gew.-% ergibt.

Ganz besonders bevorzugt enthält das mindestens eine teilkristalline Polyurethan-Polyharnstoffpolymer 80 bis 90 Gew.-% des Bestandteils A(i), 0 bis 3 Gew.-% des Bestandteils A(ii), 8 bis 14 Gew.-% des Bestandteils A(iii), 0,5 bis 3 Gew.-% des Bestandteils A(iv) und 0 bis 10 Gew.-% des Bestandteils A(v), wobei die Summe der Bestandteile 100 Gew.-% ergibt.

Als kristalline oder teilkristalline difunktionelle Polyesterpolyole A(i) kommen insbesondere lineare oder auch schwach verzweigte Polyesterpolyole in Betracht, die auf Dicarbonsäuren und/oder deren Derivaten, wie Anhydride, Ester oder Säurechloride und bevorzugt aliphatischen, linearen Polyolen basieren. Auch Mischungen von Dicarbonsäuren und/oder deren Derivate sind geeignet. Geeignete Dicarbonsäuren sind beispielsweise Adipinsäure, Bernsteinsäure, Sebacinsäure oder Dodecandisäure. Bevorzugt sind Bernsteinsäure, Adipinsäure und Sebacinsäure und deren Mischungen. Diese werden in Mengen von mindestens 90 mol-%, bevorzugt von 95 bis 100 mol-%, bezogen auf die Gesamtmenge aller Carbonsäuren, eingesetzt.

Die difunktionellen Polyesterpolyole A(i) können beispielsweise durch Polykondensation von Dicarbonsäuren mit Polyolen hergestellt werden. Die Polyole haben bevorzugt ein zahlenmittleres Molekulargewicht von wenigstens 400 g/mol, bestehen aus 2 bis 12 C-Atomen, sind vorzugsweise unverzweigt, difunktionell und/oder weisen bevorzugt primäre OH-Gruppen auf.

Beispiele für Polyole, die für die Herstellung der Polyesterpolyole A(i) verwendet werden können, sind mehrwertige Alkohole, wie z.B. Ethandiol, Di-, Tri-, Tetraethylenglykol, 1,2-Propandiol, Di-, Tri-, Tetrapropylenglykol, 1,3-Propandiol, Butandiol-1,4, Butandiol-1,3, Butandiol-2,3, Pentandiol-1,5, Hexandiol-1,6, 2,2-Dimethyl-1,3-propandiol, 1,4-Dihydroxycyclohexan, 1,4-Dimethylolcyclohexan, Octandiol-1,8, Decandiol-1,10, Dodecandiol-1,12 oder deren Gemische.

Bevorzugte Polyolkomponenten für die Polyesterpolyole A(i) sind Ethandiol-1,2, Butandiol-1,4, Hexandiol-1,6 und 1,4-Dimethylolcyclohexan oder deren Gemische.

Die Polyesterpolyole A(i) können aus einem oder mehreren Polyolen aufgebaut sein. In einer bevorzugten Ausführungsform der vorliegenden Erfindung sind sie nur aus einem Polyol aufgebaut. Wenn die kristallinen oder teilkristallinen difunktionellen Polyesterpolyole mit einem zahlenmittleren Molekulargewicht von wenigstens 400 g/mol und einer Schmelztemperatur von wenigstens 60 °C eine Schmelzwärme von wenigstens 35 J/g aufweisen, so hat das unter Verwendung desselben hergestellte Polymer regelmäßig eine Schmelzwärme von wenigstens 25 J/g, bevorzugt wenigstens 35 J/g. Falls gewünscht kann eine Adjustierung der Schmelzwärme des Polymers durch eine leichte Veränderung des Gehaltes an Polyesterpolyol A(i) in der Zusammensetzung oder durch eine geringe Variation der Schmelzwärme des Polyesterpolyols erreicht werden. Diese Maßnahmen erfordern lediglich orientierende Versuche und liegen völlig innerhalb der praktischen Erfahrung des Durchschnittsfachmanns auf diesem Gebiet.

Die Herstellung von Polyesterpolyolen A(i) ist aus dem Stand der Technik bekannt.

Das zahlenmittlere Molekulargewicht der Polyesterpolyole A(i) liegt vorzugsweise zwischen 400 und 4000 g/mol, weiter bevorzugt zwischen 1000 und 3000 g/mol, besonders bevorzugt zwischen 1500 und 2500 g/mol, ganz besonders bevorzugt zwischen 1800 und 2400 g/mol.

Die Schmelztemperatur der kristallinen bzw. teilkristallinen Polyesterpolyole A(i) liegt in der Regel mindestens bei 55 °C, bevorzugt bei 60 bis 100 °C, besonders bevorzugt bei 60 bis 90 °C. Die Schmelzwärme beträgt mindestens 35 J/g, bevorzugt mindestens 40 J/g und besonders bevorzugt mindestens 50 J/g.

Als gegebenenfalls vorhandene Aufbaukomponente A(ii) geeignete difunktionelle Polyolkomponenten mit einem Molekulargewicht von 62 bis 399 g/mol sind beispielsweise die zur Herstellung der Polyesterpolyole A(i) genannten Polyole. Auch niedermolekulare Polyesterdiole, Polyetherdiole, Polycarbonatdiole oder andere Polymerdiole sind prinzipiell geeignet, sofern sie ein Molekulargewicht von 62 bis 399 g/mol aufweisen.

Als Aufbaukomponenten A(iii) sind beliebige organische Verbindungen geeignet, die mindestens zwei freie Isocyanatgruppen pro Molekül aufweisen. Bevorzugt werden Diisocyanate der allgemeinen Formel Y(NCO)₂ eingesetzt, wobei Y für einen zweiwertigen aliphatischen Kohlenwasserstoffrest mit 4 bis 12 Kohlenstoffatomen, einen zweiwertigen cycloaliphatischen Kohlenwasserstoffrest mit 6 bis 15 Kohlenstoff-Atomen, einen zweiwertigen aromatischen Kohlenwasserstoffrest mit 6 bis 15 Kohlenstoff-Atomen oder einen zweiwertigen araliphatischen Kohlenwasserstoffrest mit 7 bis 15 Kohlenstoffatomen steht.

Bevorzugte Beispiele entsprechender Diisocyanate sind ausgewählt aus der Gruppe bestehend aus Tetramethylendiisocyanat, Methylpentamethylendiisocyanat, Hexamethylendiisocyanat, Dodecamethylendiisocyanat, 1,4-Diisocyanato-cyclohexan, 1-Isocyanato-3,3,5-trimethyl-5-isocyanato-methyl-cyclohexan, 4,4'-Diisocyanato-dicyclohexyl-methan, 4,4'-Diisocyanato-dicyclohexyl-propan-(2,2), 1,4-Di-isocyanatobenzol, 2,4-Diisocyanatotoluol, 2,6-Diisocyanatotoluol, 4,4'-Diisocyanato-diphenylmethan, 2,2'- und 2,4'-Diisocyanatodiphenylmethan, Tetramethylxylylendiisocyanat, p-Xylylendiisocyanat, p-Isopropylidendiisocyanat und Mischungen davon.

Es ist auch möglich, die in der Polyurethanchemie an sich bekannten höherfunktionellen Polyisocyanate oder auch an sich bekannte modifizierte, beispielsweise Carbodiimidgruppen, Allophanatgruppen, Isocyanuratgruppen, Urethangruppen und/oder Biuretgruppen aufweisende Polyisocyanate anteilig mitzuverwenden.

Neben den genannten einfachen Diisocyanaten sind erfindungsgemäß auch solche Polyisocyanate geeignet, die Heteroatome in dem die Isocyanatgruppen verknüpfenden Rest enthalten und/oder eine Funktionalität von mehr als 2 Isocyanatgruppen pro Molekül besitzen. Erstere sind z.B. durch Modifizierung einfacher aliphatischer, cycloaliphatischer, araliphatischer und/oder aromatischer Diisocyanate hergestellte, aus mindestens zwei Diisocyanaten aufgebaute Polyisocyanate mit Uretdion-, Isocyanurat-, Urethan-, Allophanat-, Biuret-, Carbodiimid-, Imino-oxadiazindion-und/oder Oxadiazintrion-Struktur. Als Beispiel für ein nicht-modifiziertes Polyisocyanat mit mehr als 2 Isocyanatgruppen pro Molekül sei z.B. 4-Isocyanatomethyl-1,8-octandiisocyanat (Nonantriisocyanat) genannt.

Besonders bevorzugte Aufbaukomponenten A(iii) sind ausgewählt aus der Gruppe bestehend aus Hexamethylendiisocyanat (HDI), 1-Isocyanato-3,3,5-trimethyl-5-isocyanatomethyl-cyclohexan (IPDI) und Mischungen davon.

Bevorzugte gegenüber Isocyanat reaktive Komponenten A(iv), die mindestens eine ionische oder potentiell ionische Gruppe tragen, sind Mono- und Dihydroxycarbonsäuren, Mono- und Diaminocarbonsäuren, Mono- und Dihydroxysulfonsäuren, Mono- und Diaminosulfonsäuren sowie Mono- und Dihydroxyphosphonsäuren oder Mono- und Diaminophosphonsäuren und deren Alkali-und Ammoniumsalze. Beispiele sind Dimethylolpropionsäure, Dimethylolbuttersäure, Hydroxypivalinsäure, N-(2-Aminoethyl)-β-alanin, N-(2-Aminoethyl)-2-aminoethansulfonsäure, N-(2-Aminoethyl)-2-aminoethancarbonsäure, Ethylendiaminpropyl- oder -butylsulfonsäure, 1,2- oder 1,3-Propylendiamin-β-ethylsulfonsäure, Äpfelsäure, Zitronensäure, Glykolsäure, Milchsäure, Glycin, Alanin, Taurin, Lysin, 3,5-Diaminobenzoesäure, ein Additionsprodukt von IPDI und Acrylsäure (siehe dazu EP-A 0 916 647, Beispiel 1) und dessen Alkali- und/oder Ammoniumsalze; das Addukt von Natriumbisulfit an Buten-2-diol-1,4, Polyethersulfonat, das propoxylierte Addukt aus 2-Butendiol und NaHSO₃, z.B. beschrieben in der DE-A 2 446 440, Seiten 5 bis 9, Formeln I bis III). Für die Salzbildung gut geeignet sind Natrium-, Kalium-, Lithium- und Calcium-Hydroxid sowie tertiäre Amine wie Triethylamin, Dimethylcyclohexylamin und Ethyldiisopropylamin. Es können auch andere Amine zur Salzbildung eingesetzt werden, wie z.B. Ammoniak, Diethanolamin, Triethanolamin, Dimethylethanolamin, Methydiethanolamin, Aminomethylpropanol und auch Mischungen der genannten und auch anderer Amine. Sinnvollerweise werden diese Amine erst nach der weitgehenden Umsetzung der Isocyanatgruppen zugegeben.

Weiter als Komponente A(iv) geeignet sind durch Zugabe von Säuren in kationische Gruppen überführbare Bausteine wie N-Methyl-diethanolamin.

Besonders bevorzugte Komponenten A(iv) sind solche, die über Carboxy- und/oder Carboxylat-und/oder Sulfonatgruppen verfügen.

Ganz besonders bevorzugt als Komponente A(iv) sind die Natriumsalze der N-(2-Aminoethyl)-2-aminoethansulfonsäure und der N-(2-Aminoethyl)-2-aminoethancarbonsäure, insbesondere der N-(2-Aminoethyl)-2-aminoethansulfonsäure. Weiterhin ganz besonders bevorzugt sind die Salze der Dimethylolpropionsäure.

Gegenüber Isocyanaten reaktive Komponenten A(v) können beispielsweise Polyoxyalkylenether, die mindestens eine Hydroxy- oder Aminogruppe enthalten, sein. Die häufig verwendeten Polyalkylenoxidpolyetheralkohole sind in an sich bekannter Weise durch Alkoxylierung geeigneter Startermoleküle zugänglich. Für die Alkoxylierungsreaktion geeignete Alkylenoxide sind insbesondere Ethylenoxid und Propylenoxid, die einzeln oder auch zusammen bei der Alkoxylierungsreaktion eingesetzt werden können.

Weitere gegenüber Isocyanat reaktive Komponenten A(v) sind beispielsweise Monoamine, Diamine und/oder Polyamine sowie deren Gemische.

Beispiele für Monoamine sind aliphatische und/oder alicyclische primäre und/oder sekundäre Monoamine wie Ethylamin, Diethylamin, die isomeren Propyl- und Butylamine, höhere linearaliphatische Monoamine und cycloaliphatische Monoamine wie Cyclohexylamin. Weitere Beispiele sind Aminoalkohole, d.h. Verbindungen, die in einem Molekül Amino- und Hydroxylgruppen enthalten, wie z.B. Ethanolamin, N-Methylethanolamin, Diethanolamin oder 2-Propanolamin. Beispiele für Diamine sind 1,2-Ethandiamin, 1,6-Hexamethylendiamin, 1-Amino-3,3,5-trimethyl-5-aminomethyl-cyclohexan (Isophorondiamin), Piperazin, 1,4-Diamino-cyclohexan und Bis-(4-amino-cyclohexyl)-methan. Weiterhin kommen Adipinsaeuredihydrazid, Hydrazin bzw. Hydrazinhydrat in Frage. Weitere Beispiele sind Aminoalkohole, d.h. Verbindungen, die in einem Molekül Amino- und Hydroxylgruppen enthalten, wie z.B. 1,3-Diamino-2-propanol, N-(2-Hydroxyethyl)-ethylendiamin oder N,N-Bis(2-Hydroxyethyl)-ethylendiamin. Beispiele für Polyamine sind Diethylentriamin und Triethylentetramin.

In einer bevorzugten Form der Erfindung enthält das erfindungsgemäße Polymer zur Einstellung der Molmasse mindestens ein Monoamin und/oder mindestens ein Diamin als gegenüber Isocyanat reaktive Komponente A(v).

Die erfindungsgemäße wässrige Dispersion enthält des Weiteren mindestens ein oberflächendeaktiviertes Polyisocyanat, bevorzugt mindestens ein oberflächendeaktiviertes Feststoffpolyisocyanat.

Erfindungsgemäß können glasartige, kristalline und/oder (teil)-kristalline Feststoffisocyanate eingesetzt werden. Erfindungsgemäß besonders geeignete glasartige, kristalline und/oder (teil)-kristalline Feststoffisocyanate weisen eine Schmelz- bzw. Erweichungstemperatur von mindestens 30 °C auf, bestimmt durch DSC-Messung nach DIN 65467 - 1999-03.

Erfindungsgemäß bevorzugte Feststoff-Isocyanate sind alle aliphatischen, cycloaliphatischen und aromatischen Di- und Polyisocyanate, die eine Erweichungstemperatur von mindesten 55 °C besitzen. Besonders bevorzugt sind Dimerisierungs- und Trimerisierungsprodukte des Isophorondiisocyanates, beispielsweise erhältlich als Desmodur^{®} I, Covestro Deutschland AG, Leverkusen, Bis-(4-isocyanatocyclohexyl)-methan, beispielsweise erhältlich als Desmodur^{®} W, Covestro Deutschland AG, Leverkusen, ω,ω'-Diisocyanato-1,3-dimethylcyclohexan (H6XDI) sowie Mischungen dieser Dimerisiserunsgprodukte und Trimerisierungsprodukte sowie Mischtrimerisate aus Isophorondiisocyanat/Bis-(4-isocyanatocyclohexyl)-methan, Isophorondiisocyanat/ Hexamethylendiisocyanat, Bis-(4-isocyanatocyclohexyl)-methan/Hexamethylendiisocyanat, Bis-(4-isocyanatocyclohexyl)-methan/ω,ω'-Diisocyanato-1,3-dimethylcyclohexan, Isophorondiisocyanat/ω,ω'-Diisocyanato-1,3-dimethylcyclohexan sind erfindungsgemäß einsetzbar.

Weiterhin bevorzugt sind Dimerisierungsprodukte des Toluylendiisocyanats (TDI). Besonders bevorzugt sind Trimerisierungsprodukte des Isophorondiisocyanats und Dimerisierungsprodukte des Toluylendiisocyanats.

Die erfindungsgemäße wässrige Dispersionen enthält im Allgemeinen 15 bis 60 Gew.-% des mindestens einen teilkristallinem Polyurethan-Polyharnstoffpolymers, 0,2 bis 30 Gew.-% des mindestens einen oberflächendeaktivierten Polyisocyanats und 40 bis 85 Gew.-% Wasser, bevorzugt 40 bis 50 Gew.-% des mindestens einen teilkristallinem Polyurethan-Polyharnstoffpolymer, 2 bis 10 Gew.-% des mindestens einen oberflächendeaktivierten Polyisocyanats und 50 bis 60 Gew.-% Wasser. In jedem Fall ergänzen sich die Mengen der vorliegenden Komponenten zu 100 Gew.-%.

Neben den bereits genannten Komponenten kann die erfindungsgemäße wässrige Dispersion Additive ausgewählt aus der Gruppe bestehend aus Desaktivierungsaminen, Verdickern, weiteren verarbeitungsfördernden Additiven, beispielsweise Entschäumer, und Mischungen davon enthalten.

Die erfindungsgemäße wässrige Dispersion wird hergestellt, indem eine entsprechende wässrige Dispersion des mindestens einen Polyurethan-Polyharnstoffpolymer mit dem mindestens einen oberflächendeaktivierten Polyisocyanat, bevorzugt mindestens einem oberflächendeaktivierten Feststoffpolyisocyanat, vermischt wird.

Die vorliegende Erfindung betrifft daher des Weiteren ein Verfahren zur Herstellung der erfindungsgemäßen wässrigen Dispersion mindestens umfassend das Mischen einer wässrigen Dispersion des mindestens einen Polyurethan-Polyharnstoffpolymer mit mindestens einem oberflächendeaktivierten Polyisocyanat, bevorzugt mindestens einem oberflächendeaktivierten Feststoffpolyisocyanat, beispielsweise bei Raumtemperatur.

Bevorzugt betrifft die vorliegende Erfindung das erfindungsgemäße Verfahren, wobei zusätzlich Additive hinzugegeben werden. Geeignete und bevorzugte Additive sind dem Fachmann an sich bekannt und werden weiter oben genannt.

Die erfindungsgemäße wässrige Dispersion kann auf beliebige Weise, z.B. im Sprüh-, Rakel-, Pinsel-oder Walzen-Auftragsverfahren auf, beispielsweise flächige oder dreidimensionale, Substrate appliziert werden. Nach dem Trocknen erhält man lagerstabile latent-reaktive Beschichtungen, die über einen längeren Zeitraum bei 50 °C gelagert werden können, ohne dass eine Vernetzungsreaktion abläuft, die den nachfolgenden Fügeprozess erschwert bzw. unmöglich macht. Die Arbeitsschritte Klebstoffauftrag und Fügeprozess können mit diesen Klebstoffschichten räumlich und zeitlich voneinander getrennt werden. Entsprechende flächige oder dreidimensionale Substrate sind beispielsweise Möbelfronten, elektronische Artikel und Teile im Automobilinnenraum.

Die vorliegende Erfindung betrifft daher auch die Verwendung der erfindungsgemäßen wässrigen Dispersion zur Herstellung von beschichteten, insbesondere flächigen oder dreidimensionalen Substraten.

Die vorliegende Erfindung betrifft des Weiteren flächige oder dreidimensionale Substrate, beschichtet mit der erfindungsgemäßen wässrigen Dispersion, beispielsweise Release-Liner.

Release-Liner sind dem Fachmann an sich bekannt. Ein Release Liner ist im Allgemeinen ein Substrat, auf dem die erfindungsgemäße wässrigen Dispersion appliziert wird. Nach der Applikation und der Trocknung des Klebstoffes auf dem Release-Liner, d.h. nach der Ausbildung einer Klebstoffschicht, kann der Release-Liner von dem Klebstoff abgezogen bzw. wieder rückstandsfrei vom Klebstoff getrennt werden. Durch die Verwendung von Release-Liner können erfindungsgemäße "freistehende" Klebstofffolien erzeugt werden. Bevorzugt ist der Aufbau des erfindungsgemäßen Release-Liners Release Liner//Klebstoff/Release Liner.

Nach dem Trocknen dieser Beschichtung wird ein Substrat erhalten, welches mit mindestens einem teilkristallines Polyurethan-Polyharnstoffpolymer und mindestens einem oberflächendeaktiviertes Polyisocyanat, bevorzugt mindestens einem oberflächendeaktivierten Feststoffpolyisocyanat, wobei die Schmelztemperatur des teilkristallinen Polyurethan-Polyharnstoffpolymers mindestens 55 °C beträgt, beschichtet ist.

Die vorliegende Erfindung betrifft daher auch ein Substrat, beschichtet mit mindestens einem teilkristallines Polyurethan-Polyharnstoffpolymer und mindestens einem oberflächendeaktivierten Polyisocyanat, bevorzugt mindestens einem oberflächendeaktivierten Feststoffpolyisocyanat, wobei die Schmelztemperatur des teilkristallinen Polyurethan-Polyharnstoffpolymers mindestens 55 °C beträgt, beschichtet ist.

Beispielweise kann die erfindungsgemäße wässrige Dispersion auf ein Trennpapier, z.B. Silikonpapier, polyolefinisch antihaftend ausgerüstetes Papier oder ähnliche Trägermaterialien, im Sprüh-, Rakel-, Pinsel-, oder Walzen-Auftragsverfahren aufgetragen werden. Nach dem Trocknen erhält man selbsttragende latent-reaktive Filme oder Vliese, die ggf. nach Einlegen eines Trennpapiers, aufgewickelt und bis zum Einsatz als Klebstoff-Film gelagert werden können.

Die vorliegende Erfindung betrifft des Weiteren die Verwendung der erfindungsgemäßen wässrigen Dispersion zur Herstellung von Klebstofffolien.

Klebstofffolien sind dem Fachmann an sich bekannt und beispielsweise beschrieben in EP 1 134 245 A. Typische Abmessungen solcher Klebstofffolien und Verfahren zur Herstellung entsprechender Klebstofffolien sind dem Fachmann ebenfalls bekannt.

Die vorliegende Erfindung betrifft des Weiteren eine Klebstofffolie, umfassend mindestens ein teilkristallines Polyurethan-Polyharnstoffpolymer und mindestens ein oberflächendeaktiviertes Polyisocyanat, bevorzugt mindestens ein oberflächendeaktiviertes Feststoffpolyisocyanat, dadurch gekennzeichnet, dass die Schmelztemperatur des teilkristallinen Polyurethan-Polyharnstoffpolymers mindestens 55 °C beträgt.

Details und bevorzugte Ausführungsformen des mindestens einen teilkristallinen Polyurethan-Polyharnstoffpolymers und des mindestens einen oberflächenaktivierten Polyisocyantes werden weiter oben beschrieben und gelten hier entsprechend.

Die vorliegende Erfindung betrifft des Weiteren einen getrockneten Klebstofffilm, beispielsweise einen Release Liner, erhalten aus der erfindungsgemäßen wässrigen Dispersion, bevorzugt nach dem in diesem Text beschriebenen Verfahren oder nach einem dem Fachmann bekannten Verfahren, beispielsweise beschrieben in EP 1 134 245 A.

Die vorliegende Erfindung wird anhand von Beispielen erläutert.

### Beispiele

Definition von Begriffen und Methoden:
Schmelztemperatur:
   Die Schmelztemperatur (Tm) wird mittels DSC (Differential scanning calorimetry) bestimmt. Die Schmelztemperatur ist die Temperatur, bei der der Schmelzpeak im DSC-Diagramm sein Maximum erreicht. Die Heizrate bei der Messung beträgt, wenn nicht anders angegeben, 20 K/min. Die angegebenen Schmelzpunkte sind die Werte aus der 1. Aufheizung. Zur Bestimmung der Schmelztemperatur und der Schmelzenthalpie der getrockneten Polymere der Polyurethandispersionen wurden jeweils getrocknete Polymerfilme durch Ausgießen der Dispersionen in Teflonschalen mit anschließender siebentägiger Trocknung bei Raumtemperatur erzeugt. Aus diesen Filmen wurden Stücke einer Masse von 10 mg ausgeschnitten und in DSC-Tiegel gefüllt, die dann mit Deckeln in der Tiegelpresse verschlossen wurden. Die Tiegel setzte man bei RT in die Messzelle des Kalorimeters und kühlte auf -100 °C. Es folgen drei Aufheizungen im Temperaturbereich von -100 bis +150 °C. Die Heizrate betrug 20 K/min, zwischen dem ersten und zweiten Heizlauf wurde mit 320 K/min abgekühlt, zwischen dem zweiten und dritten mit 20 K/min. Die thermische Kopplung von Kühlblock und Messzelle erfolgte durch Spülung mit Stickstoff, ein Kompressor kühlte die Messzelle. Zur Bestimmung der Schmelztemperatur und der Schmelzenthalpie wurde die erste Aufheizung ausgewertet. Das verwendete Gerät war ein Kalorimeter Pyris Diamond DSC der Firma Perkin-Elmer.
Glasübergangstemperatur:
   Die Glasübergangstemperatur (Tg) charakterisiert den Temperaturbereich, in dem ein Stoff von dem glasartigen Zustand in den viskoelastischen Zustand übergeht. Die Messung erfolgt mittels DSC (Differential scanning calorimetry). Die Änderung der spezifischen Wärme (Cp) beim Glasübergang verursacht eine Stufe (Glasstufe) im DSC-Diagramm. Die Glasübergangstemperatur ist definiert als Wendepunkt der Glasstufe im DSC-Diagramm. Die Messung erfolgt, wenn nicht andere angegeben, mit einer Heizrate von 20 K/min.
Oszillationsrheometrie:
   Die Polymerprobe wird in die temperierte Messeinheit des Oszillationsrheometers (ARES, TA-Instruments) eingelegt und einseitig einer sinusförmigen Deformation (Frequenz = 1 Hz) ausgesetzt. Die Phasenverschiebung der sinusförmigen Deformation beim Durchleiten durch die Polymerprobe wird registriert. Aus der Phasenverschiebung und dem komplexen Schubmodul G* kann der elastische Anteil = Speichermodul G' und der reibungsbehaftete Anteil G", jeweils in Pa, berechnet werden.
   Alle Proben wurden bei 120 °C und der Frequenz 1 Hz gemessen. Die Messwerte wurden im zeitlichen Abstand von 20 sec. aufgenommen. Aus dem Werten für den Speichermodul G', die in den ersten 60 sec. nach dem Start der Messung aufgenommen werden, wird der arithmetische Mittelwert berechnet.
   Steigt der arithmetische Mittelwert für den Speichermodul G' während der Lagerung der reaktiven Polymerproben um mehr als 200% an, dann gilt die Probe als nicht lagerstabil.

### Verwendete Rohstoffe/Produkte:

Dispercoll^{®} BL XP 2514:
Wässrige Suspension von oberflächendeaktivierten TDI-Dimer, Schmelzpunkt von > 145 °C, NCO Gehalt ca. 8 Gew.-%, Covestro Deutschland AG, Leverkusen
Desmodur^{®} Z 2589:
Mikronisiertes IPDI-Trimer, NCO-Gehalt ca. 17 Gew.-%, Partikelgröße d50 ca. 1,5 µm, Tg + 65 °C, Covestro Deutschland AG, Leverkusen
Jeffamine T-403:
Polyoxypropylentriamin, Molekulargewicht von ca. 440 g/mol, Fa. Huntsman Performance Products GmbH, Hamburg
BorchiGel L 75N:
Flüssiges Verdickungsmittel auf Polyurethanbasis, Fa. Borchers GmbH, Langenfeld
BorchiGel ALA:
Flüssiges Verdickungsmittel auf Polyarcylatbasis, Fa. Borchers GmbH, Langenfeld
Tamol NN 4501:
Kondensationsprodukt aus 2-Naphthalinsulfonsäure, 45 Gew.-% in Wasser der BASF AG, 67056 Ludwigshafen, Deutschland
Lucramul 1820-liq:
Wässrige Lösung von Stearylalkoholpolyglykolether, Fa. LEVACO Chemicals GmbH, Leverkusen
Polyesterdiol 1:
semikristalliner Polyester aus Sebazinsäure und 1,4-Butandiol, OH-Zahl 59,0, Schmelztemperatur 61 °C
Polyesterdiol 2:
semikristalliner Polyester aus Sebazinsäure und Etylenglykol mit einer OH-Zahl 58,0, Schmelztemperatur 76 °C
Polyesterdiol 3:
semikristalliner Polyester aus Adipinsäure und 1,4-Dimethylolcyclohexan, OH-Zahl 50,9, Schmelztemperatur 79,8 °C
Polyesterdiol 4:
semikristalliner Polyester aus einer Mischung aus 70 mol-% Bernsteinsäure und 30 mol-% Adipinsäure und 1,4-Butandiol, OH-Zahl 52,4, Schmelztemperatur 79,8 °C
PUD 1 (Vergleich):
Polyurethandispersion der Covestro Deutschland AG, Leverkusen, Feststoffgehalt ca. 50 Gew.-%, Isocyanat-reaktives Polymer aus linearen Polyurethanketten. Das Polymer kristallisiert nach dem Trocknen der Dispersion und Abkühlen des Films auf +23 °C. Bei Messung mittels DSC liegt der Schmelzpunkt des Polyurethanpolymers bei +47 °C, die Schmelzenthalpie bei 56 J/g.
PUD 2 (Vergleich):
Polyurethandispersion der Covestro Deutschland AG, Leverkusen, Feststoffgehalt ca. 50 Gew.-%, Isocyanat-reaktives Polymer aus linearen Polyurethanketten. Das Polymer kristallisiert nach dem Trocknen der Dispersion und Abkühlen des Films auf +23 °C. Bei Messung mittels DSC liegt der Schmelzpunkt des Polyurethanpolymers bei +47 °C, die Schmelzenthalpie bei 42 J/g.
Herstellung der PUD 3 (erfindungsgemäß):
382,28 g des Polyesterdiols 1 werden 1 Stunde bei 110 °C und 15 mbar entwässert. Anschließend werden bei 80 °C 20,14 g Isophorondiisocyanat (IPDI) und 30,11 g Hexamethylendiisocyanat (HDI) zugegeben. Die Mischung wird 1 Stunde bei 80 °C und anschließend solange bei 95 °C gerührt, bis ein Isocyanatgehalt von 1,36 Gew.-% erreicht ist. Das Reaktionsgemisch wird in 650 g Aceton gelöst und dabei auf 50 °C abgekühlt. In die homogene Lösung wird eine Lösung aus 8,86 g Natriumsalz der N-(2-Aminoethyl)-2-aminoethansulfonsäure und 0,90 g Diethanolamin in 80 g Wasser unter kräftigem Rühren gegeben. Nach 30 Minuten wird durch Zugabe von 590 g Wasser dispergiert. Nach destillativer Abtrennung des Acetons werden unter Rühren 25,5 g Lucramul 1820-liq zugesetzt. Es wird eine stabile wässrige Polyurethan-Polyharnstoff-Dispersion mit einem Feststoffgehalt von 40,2 Gew.-% erhalten. Die Schmelztemperatur des getrockneten Polymers beträgt 57,5 °C, die Schmelzenthalpie 69,0 J/g.
Herstellung der PUD 4 (erfindungsgemäß):
386,80 g des Polyesterdiols 2 werden 1 Stunde bei 110 °C und 15 mbar entwässert. Anschließend werden bei 80 °C 20,14 g Isophorondiisocyanat (IPDI) und 30,11 g Hexamethylendiisocyanat (HDI) zugegeben. Die Mischung wird solange bei 80 °C gerührt, bis ein Isocyanatgehalt von 1,20 Gew.-% erreicht ist. Das Reaktionsgemisch wird in 656 g Aceton gelöst und dabei auf 50 °C abgekühlt. In die homogene Lösung wird eine Lösung aus 8,86 g Natriumsalz der N-(2-Aminoethyl)-2-aminoethansulfonsäure und 0,90 g Diethanolamin in 80 g Wasser unter kräftigem Rühren gegeben. Nach 30 Minuten wird durch Zugabe von 600 g, 60 °C warmen Wasser dispergiert. Nach destillativer Abtrennung des Acetons werden unter Rühren 23,0 g Lucramul 1820-liq zugesetzt. Es wird eine stabile wässrige Polyurethan-Polyharnstoff-Dispersion mit einem Feststoffgehalt von 39,7 Gew.-% erhalten. Die Schmelztemperatur des getrockneten Polymers beträgt 59,5 °C, die Schmelzenthalpie 65,9 J/g.
Herstellung der PUD 5 (erfindungsgemäß):
330,60 g des Polyesterdiols 3 werden 1 Stunde bei 110 °C und 15 mbar entwässert. Anschließend werden bei 80 °C 15,10 g Isophorondiisocyanat (IPDI) und 22,58 g Hexamethylendiisocyanat (HDI) zugegeben. Die Mischung wird auf 90 °C erwärmt und solange bei 90 °C gerührt, bis ein Isocyanatgehalt von 1,16 Gew.-% erreicht ist. Das Reaktionsgemisch wird bei 90 °C in 550 g Aceton gelöst und anschließend auf 50 °C abgekühlt. In die homogene Lösung wird eine Lösung aus 5,62 g Natriumsalz der N-(2-Aminoethyl)-2-aminoethansulfonsäure und 01,93 g Diethanolamin in 55 g Wasser unter kräftigem Rühren gegeben. Nach 30 Minuten wird durch Zugabe von 520 g, 50 °C warmen Wasser dispergiert. Nach destillativer Abtrennung des Acetons werden unter Rühren 19,29 g Lucramul 1820-liq zugesetzt. Es wird eine stabile wässrige Polyurethan-Polyharnstoff-Dispersion mit einem Feststoffgehalt von 40,2 Gew.-% erhalten. Die Schmelztemperatur des getrockneten Polymers beträgt 60,9 °C, die Schmelzenthalpie 26,4 J/g.
Herstellung der PUD 6 (erfindungsgemäß):
321,15 g des Polyesterdiols 4 werden 1 Stunde bei 110 °C und 15 mbar entwässert. Anschließend werden bei 80 °C 15,10 g Isophorondiisocyanat (IPDI) und 22,58 g Hexamethylendiisocyanat (HDI) zugegeben. Die Mischung wird auf 90 °C erwärmt und solange bei 90 °C gerührt, bis ein Isocyanatgehalt von 1,18 Gew.-% erreicht ist. Das Reaktionsgemisch wird bei 90 °C in 540 g Aceton gelöst und anschließend auf 50 °C abgekühlt. In die homogene Lösung wird eine Lösung aus 5,62 g Natriumsalz der N-(2-Aminoethyl)-2-aminoethansulfonsäure und 1,93 g Diethanolamin in 55 g Wasser unter kräftigem Rühren gegeben. Nach 30 Minuten wird durch Zugabe von 502 g, 50 °C warmen Wasser dispergiert. Nach destillativer Abtrennung des Acetons werden unter Rühren 19,94 g Lucramul 1820-liq zugesetzt. Es wird eine stabile wässrige Polyurethan-Polyharnstoff-Dispersion mit einem Feststoffgehalt von 39,9 Gew.-% erhalten. Die Schmelztemperatur des getrockneten Polymers beträgt 69,1 °C, die Schmelzenthalpie 69,8 J/g.

**Tabelle 1: Schmelzpunkte der Polyurethan-Polyharnstoffpolymere**

| Polyurethan-Polyharnstoff-Polymer aus | Schmelzpunkt [°C] |
|---|---|
| PUD 1 (Vergleich) | 48,9 |
| PUD 2 (Vergleich) | 46,9 |
| PUD 3 | 57,5 |
| PUD 4 | 59,5 |
| PUD 5 | 60,0 |
| PUD 6 | 69,1 |

Herstellung der Klebstoffdispersionen:
Die jeweilige PUD wird in einem Edelstahlbecher (Durchmesser = 7 cm) vorgelegt. Es werden nacheinander Dispercoll BL XP 2514, Jeffamine T-403 und BorchiGel L 75 zugeben. Die Mischung mit dem Dissolver 5 min. bei 700 rpm (Durchmesser der Dissolverscheibe = 4 cm) homogen vermischt.

**Tabelle 2: Zusammensetzung der Klebstoffdispersionen:**

| Beispiel | PUD | Menge an PUD [g] | Menge an Dispercoll^{®} BL XP 2514 [g] | Menge an Jeffamine T-403 [g] | Menge an BorchiGel L75 [g] |
|---|---|---|---|---|---|
| V1 | 1 | 100 | 7 | 0,15 | 0,4 |
| V2 | 2 | 100 | 7 | 0,15 | 0,4 |
| 3 | 3 | 100 | 7 | 0,15 | 0,4 |
| 4 | 4 | 100 | 7 | 0,15 | 0,4 |
| 5 | 5 | 100 | 7 | 0,15 | 0,4 |
| 6 | 6 | 100 | 7 | 0,15 | 0,4 |

| | | | | | |
|---|---|---|---|---|---|
| V Vergleichsbeispiele | | | | | |

Herstellung der Polymerproben für die Oszillationsrheometrie:
7 g der jeweiligen Klebstoffdispersion aus den Beispielen 1 bis 6 werden in eine Teflonschale (Durchmesser = 7 cm) gegeben. Nach dem Trocknen der Klebstoffdispersion für 1 Woche im Normklima bei 23 °C und 50% rel. Feuchte bilden sich jeweils ca. 0,8 mm dicke Polymerfilme. Die erste Messung der Polymerfilme im Oszillationsrheometer erfolgt unmittelbar nach der Trocknung. Die getrockneten Polymerfilme werden bei 55 °C über 5 Monate gelagert. Monatlich werden Proben der gelagerten Polymerfilme im Rheometer untersucht.
Oszillationsrheometrie:
Unmittelbar nach dem Einsetzen der Probe in die auf 120 °C temperierte Messeinheit des ARES Rheometers wird die Messung gestartet. Aus den Speichermodulwerten der ersten 60 sec. nach dem Start der Messungen werden die Mittelwerte berechnet. Die Vernetzung des Polymers während der Lagerung wird durch den Anstieg von G'-Mittelwerte sichtbar. Steigt der G'-Mittelwert auf einen Wert ≥ 200% an, bezogen auf den Ausgangswert der Probe unmittelbar nach Erzeugung der reaktiven Klebstoffprobe, dann gilt die Polymerprobe als soweit vernetzt, dass die Benetzung der Substratoberflächen durch das geschmolzene Polymer nicht mehr gewährleistet werden kann.

**Tabelle 3: Prozentuale Änderung der G'-Mittelwerte (60 sec.) bei 120 °C**

| Beispiel | 1 Monat | 2 Monate | 3 Monate | 4 Monate | 5 Monate |
|---|---|---|---|---|---|
| V1 | 100 | 128 | 223 | - | - |
| V2 | 483 | - | - | - | - |
| 3 | 120 | 108 | 115 | 79 | 105 |
| 4 | 53 | 66 | 70 | 49 | 86 |
| 5 | 82 | 129 | 103 | 163 | - |
| 6 | 102 | 132 | 112 | 113 | 89 |

Bei den Vergleichsbeispielen V1 und V2 verdoppeln sich die G'-Mittelwerte aus den Oszillationmessungen bei 120 °C/1 Hz bereits nach einem bzw. drei Monaten Lagerung bei 55°C. Die Proben der erfindungsgemäßen Beispiele 3 bis 6 bleiben stabil.

Die Speichermodulwerte der reaktiven Klebstoffpolymere der erfindungsgemäßen Beispiele 3 und 6 steigen bei der Lagerung bei 55 °C nicht über den Grenzwert von 200% an. Somit sind Lagertemperaturen oberhalb 55 °C mit den erfindungsgemäßen reaktiven Klebstoffpolymeren prinzipiell möglich.

## Patentansprüche

1. Wässrige Dispersion enthaltend mindestens ein teilkristallines Polyurethan-Polyharnstoffpolymer und mindestens ein oberflächendeaktiviertes Polyisocyanat, bevorzugt mindestens ein oberflächendeaktiviertes Feststoffpolyisocyanat, **dadurch gekennzeichnet, dass** die Schmelztemperatur des teilkristallinen Polyurethan-Polyharnstoffpolymers mindestens 55 °C beträgt.

2. Dispersion nach Anspruch 1, **dadurch gekennzeichnet, dass** das mindestens eine Polyurethan-Polyharnstoffpolymer aufgebaut ist aus
A(i) mindestens einem kristallinen oder teilkristallinen difunktionellen Polyesterpolyol mit einem zahlenmittleren Molekulargewicht von wenigstens 400 g/mol und einer Schmelztemperatur von wenigstens 55 °C,
A(ii) optional mindestens einer difunktionellen Polyolkomponente mit einem zahlenmittleren Molekulargewicht von 62 bis 399 g/mol,
A(iii) mindestens einer Isocyanatkomponente,
A(iv) mindestens einer gegenüber Isocyanat reaktiven Komponente, die mindestens eine ionische oder potentiell ionische Gruppe trägt, und
A(v) optional weiteren gegenüber Isocyanat reaktiven Komponenten.

3. Dispersion nach Anspruch 2, **dadurch gekennzeichnet, dass** mindestens eine teilkristalline Polyurethan-Polyharnstoffpolymer 50 bis 95 Gew.-% des Bestandteils A(i), 0 bis 10 Gew.-% des Bestandteils A(ii), 4 bis 25 Gew.-% des Bestandteils A(iii), 0,5 bis 10 Gew.-% des Bestandteils A(iv) und 0 bis 30 Gew.-% des Bestandteils A(v) enthält, wobei die Summe der Bestandteile 100 Gew.-% ergibt.

4. Dispersion nach einem der Ansprüche 1 bis 3, **dadurch gekennzeichnet, dass** das mindestens eine oberflächendeaktivierte Polyisocyanat ein Dimerisierungs- oder Trimerisierungsprodukt des Isophorondiisocyanates, Bis-(4-isocyanatocyclohexyl)-methans, ω,ω'-Diisocyanato-1,3-dimethylcyclohexan (H6XDI) sowie Mischungen dieser Dimerisiserunsgprodukte und Trimerisierungsprodukte, sowie Mischtrimerisate aus Isophorondiisocyanat/Bis-(4-isocyanatocyclohexyl)-methan, Isophorondiisocyanat/Hexamethylendiisocyanat, Bis-(4-isocyanatocyclohexyl)-methan/Hexamethylendiisocyanat, Bis-(4-isocyanatocyclohexyl)-methan/ω,ω'-Diisocyanato-1,3-dimethylcyclohexan oder Isophorondiisocyanat/ω,ω'-Diisocyanato-1,3-dimethylcyclohexan ist.

5. Dispersion nach einem der Ansprüche 2 bis 4, **dadurch gekennzeichnet, dass** Aufbaukomponente A(iii) ausgewählt ist aus der Gruppe bestehend aus Hexamethylendiisocyanat (HDI), 1-Isocyanato-3,3,5-trimethyl-5-isocyanatomethylcyclohexan (IPDI) und Mischungen davon.

6. Dispersion nach einem der Ansprüche 1 bis 6, **dadurch gekennzeichnet, dass** sie 15 bis 60 Gew.-% des mindestens einen teilkristallinem Polyurethan-Polyharnstoffpolymers, 0,2 bis 30 Gew.-% des mindestens einen oberflächendeaktivierten Polyisocyanats und 40 bis 85 Gew.-% Wasser, bevorzugt 40 bis 50 Gew.-% des mindestens einen teilkristallinem Polyurethan-Polyharnstoffpolymer, 2 bis 10 Gew.-% des mindestens einen oberflächendeaktivierten Polyisocyanats und 50 bis 60 Gew.-% Wasser enthält, wobei sich die Mengen der vorliegenden Komponenten jeweils zu 100 Gew.-% ergänzen.

7. Verfahren zur Herstellung der wässrigen Dispersion nach einem der Ansprüche 1 bis 6 durch Mischen einer wässrigen Dispersion des mindestens einen Polyurethan-Polyharnstoffpolymer mit mindestens einem oberflächendeaktivierten Polyisocyanat, bevorzugt mindestens einem oberflächendeaktivierten Feststoffpolyisocyanat.

8. Verfahren nach Anspruch 7, **dadurch gekennzeichnet, dass** zusätzlich Additive hinzugegeben werden.

9. Verwendung der wässrigen Dispersion nach einem der Ansprüche 1 bis 6 zur Herstellung von beschichteten Substraten.

10. Verwendung der wässrigen Dispersion nach einem der Ansprüche 1 bis 6 zur Herstellung von Klebstofffolien.

11. Flächige oder dreidimensionale Substrate, beschichtet mit der wässrigen Dispersion nach einem der Ansprüche 1 bis 6.

12. Substrat, beschichtet mit mindestens einem teilkristallinen Polyurethan-Polyharnstoffpolymer und mindestens einem oberflächendeaktivierten Polyisocyanat, bevorzugt mindestens einem oberflächendeaktivierten Feststoffpolyisocyanat, **dadurch gekennzeichnet, dass** die Schmelztemperatur des teilkristallinen Polyurethan-Polyharnstoffpolymers mindestens 55 °C beträgt.

13. Klebstofffolie, umfassend mindestens ein teilkristallines Polyurethan-Polyharnstoffpolymer und mindestens ein oberflächendeaktiviertes Polyisocyanat, bevorzugt mindestens ein oberflächendeaktiviertes Feststoffpolyisocyanat, **dadurch gekennzeichnet, dass** die Schmelztemperatur des teilkristallinen Polyurethan-Polyharnstoffpolymers mindestens 55 °C beträgt.

14. Getrockneter Klebstofffilm, erhalten aus einer wässrigen Dispersion nach einem der Ansprüche 1 bis 6.
